# EUROPEAN PATENT SPECIFICATION

(11) **EP 4 415 092 B1**
(45) Date of publication and mention of the grant of the patent: **27.08.2025**
(21) Application number: 24150911.6
(22) Date of filing: 09.01.2024
(51) Int. Cl.: H01M 10/04, H01M 50/186, H01M 50/474, H01M 10/0585, H01M 10/42, H01M 50/198, H01M 4/02, H01M 4/133, H01M 4/131, H01M 4/66

(54) **POWER STORAGE MODULE**
STROMSPEICHERMODUL
MODULE DE STOCKAGE D'ÉNERGIE

(30) Priority: 13.02.2023 JP 2023019928
(43) Date of publication of application: 14.08.2024
(73) Proprietor: TOYOTA JIDOSHA KABUSHIKI KAISHA, Toyota-shi, Aichi-ken, 471-8571 (JP)
(72) Inventor: MATSUI, Nobuo, Toyota-shi, 471-8571 (JP)
(74) Representative: D Young & Co LLP

(56) References cited:
- WO-A1-2022/102286
- WO-A1-2022/154005
- JP-A- 2021 170 486
- US-A1- 2023 261 348

## Description

### BACKGROUND

### Field

The present disclosure relates to a power storage module.

### Description of the Background Art

Japanese Patent Laying-Open No. 2022-081868 discloses a conventional power storage module. In the power storage module, a spacer prevents a short circuit caused by contact between a positive electrode current collector and a negative electrode current collector. The spacer is in the form of a frame that surrounds a positive electrode active material layer and a negative electrode active material layer. The spacer seals an enclosed space, together with the positive electrode current collector and the negative electrode current collector, to thereby suppress leakage of an electrolyte contained in the enclosed space to the outside of the enclosed space. Document WO2022102286A1 discloses a power storage module according to the state of the art.

### SUMMARY

There is a need of a power storage module that allows early suppression of a further increase in temperature when excessive heat generation occurs in the power storage module.

The present disclosure has been made in light of the above-described problem, and an object of the present disclosure is to provide a power storage module that allows early suppression of a further increase in temperature.

A power storage module according to the present disclosure includes: a pair of electrode plates; a sealing member; a battery element; and an insulating member. The sealing member is provided between the pair of electrode plates to form a space together with the pair of electrode plates. The battery element includes a positive electrode active material layer, a negative electrode active material layer and an electrolyte. The positive electrode active material layer is provided on a surface of one of the pair of electrode plates in the space. The negative electrode active material layer is provided on a surface of the other of the pair of electrode plates in the space. The insulating member is positioned between the pair of electrode plates, the insulating member being provided on a side opposite to the space when viewed from the sealing member. A melting point of the insulating member is lower than a melting point of the sealing member.

According to this configuration, when the temperature of the battery element increases excessively, the insulating member melts before the sealing member melts. This causes the pair of electrode plates to face each other outside the space, and electric discharge occurs between the facing electrode plates. This electric discharge causes the battery element to be externally short-circuited, and a state of charge (SOC) of the battery element decreases forcibly. Therefore, a further increase in temperature of the battery element having the excessively increased temperature can be suppressed. Thus, it is possible to provide a power storage module that allows early suppression of a further increase in temperature.

In the power storage module according to the present disclosure, the battery element may further include a separator positioned between the positive electrode active material layer and the negative electrode active material layer. It is preferable that the melting point of the insulating member should be lower than a melting point of the separator.

According to this configuration, since the insulating member melts before an internal short circuit caused by melting of the separator occurs, the electrode plates face each other earlier outside the space and an external short circuit caused by electric discharge occurs earlier. Thus, an increase in temperature of the battery element can be suppressed earlier.

In the power storage module according to the present disclosure, it is preferable that the melting point of the insulating member should be higher than 60°C.

According to this configuration, when the temperature of the power storage module is equal to or lower than 60°C, which is a temperature at which the power storage module can operate relatively normally, melting of the insulating member can be prevented.

The power storage module according to the present disclosure may further include three or more electrode plates including the pair of electrode plates, the three or more electrode plates being aligned in one direction. It is preferable that each of the sealing member, the battery element and the insulating member should be provided between the electrode plates that are adjacent to each other, of the three or more electrode plates.

According to this configuration, heat generated by an external short circuit of the battery element having generated heat excessively is conveyed to a sealing member between electrode plates corresponding to another battery element. This heat causes the sealing member between the electrode plates corresponding to the other battery element to melt, and an external short circuit also occurs in the other battery element due to electric discharge between the electrode plates. Thus, an SOC of the power storage module as a whole decreases forcibly, and a further increase in temperature of the power storage module can be further suppressed.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a cross-sectional view showing a power storage module according to an embodiment of the present disclosure.
Fig. 2 is a schematic cross-sectional view showing a state in which the power storage module according to the embodiment of the present disclosure is being charged.
Fig. 3 is a schematic cross-sectional view showing a state in which the power storage module according to the embodiment of the present disclosure has been overcharged and a first insulating member has melted away.
Fig. 4 is a schematic cross-sectional view showing a state in which the power storage module according to the embodiment of the present disclosure has been overcharged and a plurality of insulating members have melted away.

### DESCRIPTION OF THE PREFERRED EMBODIMENTS

Hereinafter, a power storage module according to an embodiment of the present disclosure will be described with reference to the drawings. In the following description of the embodiment, the same or corresponding portions in the drawings are denoted by the same reference characters and description thereof will not be repeated.

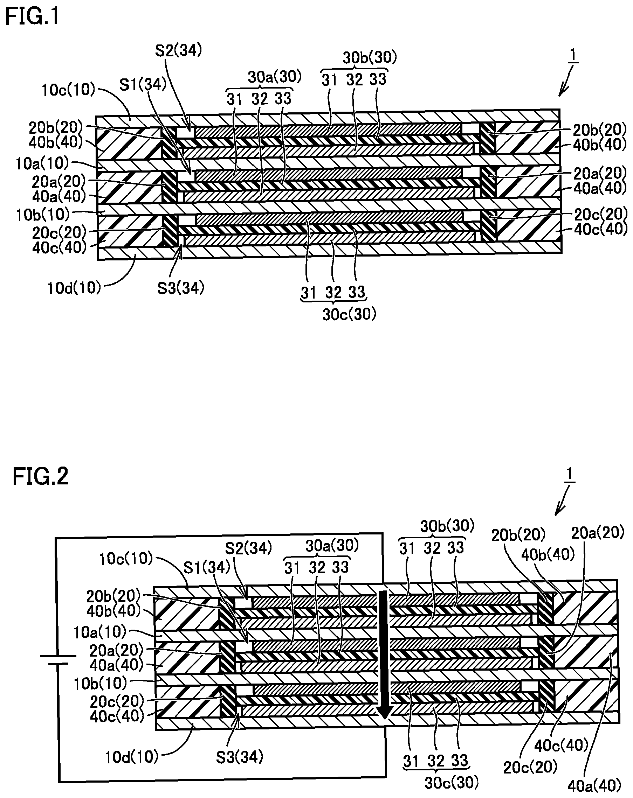

Fig. 1 is a cross-sectional view showing a power storage module according to an embodiment of the present disclosure. As shown in Fig. 1, a power storage module 1 according to the embodiment of the present disclosure includes a pair of electrode plates 10a and 10b, a sealing member 20a, a battery element 30a, and an insulating member 40a.

Both of electrode plates 10a and 10b have electrical conductivity, and specifically, are made of metal. Each of electrode plates 10a and 10b has a positive electrode current collector plate and a negative electrode current collector plate. The positive electrode current collector plate and the negative electrode current collector plate are joined to each other by an adhesive layer. In the present embodiment, the positive electrode current collector plate of one electrode plate 10a of the pair of electrode plates 10a and 10b and the negative electrode current collector plate of the other electrode plate 10b face each other with battery element 30a interposed therebetween.

When power storage module 1 includes only the pair of electrode plates 10a and 10b as electrode plates, electrode plate 10a may include only the positive electrode current collector plate and electrode plate 10b may include only the negative electrode current collector plate.

The positive electrode current collector plate may include at least one selected from the group consisting of aluminum (Al), stainless steel, nickel (Ni), chromium (Cr), platinum (Pt), niobium (Nb), iron (Fe), titanium (Ti), and zinc (Zn). The positive electrode current collector plate is formed, for example, by a metal member such as Al foil.

The negative electrode current collector plate may include at least one selected from the group consisting of aluminum (Al), stainless steel, nickel (Ni), chromium (Cr), platinum (Pt), niobium (Nb), iron (Fe), titanium (Ti), and zinc (Zn). The negative electrode current collector plate is formed, for example, by a metal member such as Al foil.

Sealing member 20a is provided between the pair of electrode plates 10a and 10b to form a (first) space S1 together with the pair of electrode plates 10a and 10b. Space S1 is an enclosed space.

Sealing member 20a has, for example, a rectangular cylindrical outer shape. Sealing member 20a is formed by curing a resin member such as a hot melt member, a thermoplastic resin, a thermosetting resin, or a photocurable resin. Examples of a material constituting sealing member 20a include a polyolefin-based resin such as polyethylene (PE) or polypropylene (PP), or a polyester-based resin such as polyethylene terephthalate (PET).

Battery element 30a includes a positive electrode active material layer 31, a negative electrode active material layer 32, a separator 33, and an electrolyte 34.

Positive electrode active material layer 31 is provided on a surface of one electrode plate 10a in space S1. Specifically, positive electrode active material layer 31 is provided on the positive electrode current collector plate of electrode plate 10a.

The positive electrode active material layer includes a positive electrode active material, a conductive material and a binder. The positive electrode active material may include, for example, at least one selected from the group consisting of lithium cobalt oxide, lithium nickel oxide, lithium manganese oxide, lithium nickel cobalt manganese oxide (such as, for example, LiNi_{1/3}Co_{1/3}Mn_{1/3}O₂), lithium nickel cobalt aluminate, and lithium iron phosphate.

The conductive material may include, for example, at least one selected from the group consisting of carbon black (such as acetylene black), vapor grown carbon fiber (VGCF), carbon nanotube (CNT), and graphene flake.

The binder may include, for example, at least one selected from the group consisting of carboxymethylcellulose (CMC), styrene-butadiene rubber (SBR), polyvinylidene fluoride (PVdF), and polytetrafluoroethylene (PTFE).

Negative electrode active material layer 32 is provided on a surface of the other electrode plate 10b in space S1. Specifically, negative electrode active material layer 32 is provided on the negative electrode current collector plate of electrode plate 10b.

Negative electrode active material layer 32 includes a negative electrode active material and a binder. The negative electrode active material may be, for example, a carbon-based negative electrode active material such as natural graphite, easily graphitizable carbon or non-graphitizable carbon, or may be an alloy-based negative electrode active material containing silicon (Si), tin (Sn) or the like. A material that can be used as the binder included in the positive electrode active material layer can be used as the binder.

Separator 33 is positioned between positive electrode active material layer 31 and negative electrode active material layer 32. Separator 33 is formed to have, for example, a sheet shape. Although not particularly limited, a thickness of separator 33 may be, for example, approximately 20 µm. Separator 33 is joined to sealing member 20. Therefore, space S1 is further partitioned into two spaces by separator 33.

Examples of separator 33 include a porous film made of a polyolefin-based resin such as polyethylene (PE) or polypropylene (PP), woven or non-woven cloth made of a polyamide-based resin such as nylon and aromatic polyamide (aramid), polypropylene, polyethylene terephthalate (PET), or methylcellulose, or the like. Separator 33 may be reinforced with a vinylidene fluoride resin compound.

Separator 33 may have, for example, a multilayer structure, and specifically, may have a three-layer structure. Separator 33 may include, for example, a PP layer, a PE layer and a PP layer. The PP layer, the PE layer and the PP layer may be stacked in this order.

Electrolyte 34 is arranged in space S1. In the present embodiment, electrolyte 34 is an electrolyte solution injected into space S1. Specifically, electrolyte 34 is a non-aqueous electrolyte solution or a water-based electrolyte solution, and is, for example, a mixed solvent of EC/EMC/DMC. Alternatively, electrolyte 34 may be a solid electrolyte. When electrolyte 34 is a solid electrolyte, electrolyte 34 is provided between positive electrode active material layer 31 and negative electrode active material layer 32, and battery element 30a may not be provided with the separator.

Insulating member 40a is positioned between the pair of electrode plates 10a and 10b, insulating member 40a being provided on a side opposite to space S1 when viewed from sealing member 20a. It is preferable that insulating member 40a should be arranged such that the pair of electrode plates 10a and 10b do not directly face each other on the side opposite to space S1 when viewed from sealing member 20a. It is also preferable that insulating member 40a is arranged only in a space between the pair of electrode plates 10a and 10b.

Examples of a material constituting insulating member 40a include a polyolefin-based resin such as polyethylene (PE) or polypropylene (PP), oils and fats such as paraffin, or the like.

A melting point of insulating member 40a is lower than a melting point of sealing member 20a. In addition, the melting point of insulating member 40a is preferably lower than a melting point of separator 33. A difference between the melting point of sealing member 20a and the melting point of insulating member 40a is preferably equal to or higher than 20°C, more preferably equal to or higher than 30°C, and further preferably equal to or higher than 40°C. Furthermore, considering that an example of the temperature at which power storage module 1 can operate normally is approximately 50°C or lower to 60°C or lower, the melting point of insulating member 40a is preferably higher than 60°C. The melting point of separator 33 is preferably equal to or higher than the melting point of sealing member 20a. When electrolyte 34 is a solid electrolyte, the operating temperature of power storage module 1 may reach a high temperature of approximately 80°C. Therefore, a sealing member and an insulating member that have melting points of 80°C or higher or 90°C or higher may be used as sealing member 20a and insulating member 40a.

Considering the melting points of the materials described above, examples of a combination of sealing member 20a, separator 33 and insulating member 40a include the following combinations.

When sealing member 20a is PE (melting point of about 120°C) and separator 33 is a porous film made of PE (melting point of about 120°C) or PP (melting point of about 160°C), or woven or non-woven cloth made of aromatic polyamide (aramid) (melting point of about 200°C to 300°C), paraffin (melting point of about 70°C to 100°C) can be used as a material constituting insulating member 40a. When sealing member 20a is PP (melting point of about 160°C) and separator 33 is a porous film made of PP (melting point of about 160°C), or woven or non-woven cloth made of aromatic polyamide (aramid) (melting point of about 200°C to 300°C), paraffin (melting point of about 70°C to 100°C) or PE (melting point of about 120°C) can be used as a material constituting insulating member 40a. When sealing member 20a is PET (melting point of about 260°C) and separator 33 is woven or non-woven cloth made of aromatic polyamide (aramid) (melting point of about 200°C to 300°C), paraffin (melting point of about 70°C to 100°C) or PE (melting point of about 120°C) or PP (melting point of about 160°C) can be used as a material constituting insulating member 40a.

Power storage module 1 according to the present embodiment includes three or more electrode plates 10 aligned in one direction. Three or more electrode plates 10 aligned in one direction include the pair of electrode plates 10a and 10b described above. Specifically, as shown in Fig. 1, power storage module 1 according to the present embodiment includes four electrode plates 10. However, power storage module 1 according to the present embodiment may include five or more electrode plates 10.

Power storage module 1 according to the present embodiment further includes a third electrode plate 10c positioned on a side opposite to the other electrode plate 10b (second electrode plate 10b) when viewed from one electrode plate 10a (first electrode plate 10a) of the pair of electrode plates 10. Power storage module 1 further includes a fourth electrode plate 10d positioned on a side opposite to first electrode plate 10a when viewed from second electrode plate 10b.

Each of sealing member 20, battery element 30 and insulating member 40 is provided between electrode plates 10 that are adjacent to each other, of three or more electrode plates 10 (in the present embodiment, four electrode plates 10c, 10a, 10b, and 10d). That is, in the present embodiment, power storage module 1 includes a plurality of sealing members 20, a plurality of battery elements 30, and a plurality of insulating members 40. Power storage module 1 according to the present embodiment is a so-called bipolar battery.

The plurality of sealing members 20 include (first) sealing member 20a, and further include a second sealing member 20b and a third sealing member 20c.

Second sealing member 20b is provided between first electrode plate 10a and third electrode plate 10c to form a second space S2 together with first electrode plate 10a and third electrode plate 10c. Second space S2 is an enclosed space. Third sealing member 20c is provided between second electrode plate 10b and fourth electrode plate 10d to form a third space S3 together with second electrode plate 10b and fourth electrode plate 10d. Third space S3 is an enclosed space.

The plurality of battery elements 30 include (first) battery element 30a, and further include a second battery element 30b and a third battery element 30c.

Positive electrode active material layer 31 of second battery element 30b is provided on a surface of third electrode plate 10c in second space S2. Negative electrode active material layer 32 of second battery element 30b is provided on a surface of first electrode plate 10a in second space S2. Separator 33 is also positioned between these positive electrode active material layer 31 and negative electrode active material layer 32. Electrolyte 34 is also arranged in space S2.

Positive electrode active material layer 31 of third battery element 30c is provided on a surface of second electrode plate 10b in third space S3. Negative electrode active material layer 32 of third battery element 30c is provided on a surface of fourth electrode plate 10d in third space S3. Separator 33 is also positioned between these positive electrode active material layer 31 and negative electrode active material layer 32. Electrolyte 34 is also arranged in space S3.

The plurality of insulating members 40 include (first) insulating member 40a, and further include a second insulating member 40b and a third insulating member 40c.

Second insulating member 40b is positioned between first electrode plate 10a and third electrode plate 10c, second insulating member 40b being provided on a side opposite to second space S2 when viewed from second sealing member 20b. Third insulating member 40c is positioned between second electrode plate 10b and fourth electrode plate 10d, third insulating member 40c being provided on a side opposite to third space S3 when viewed from third sealing member 20c.

The plurality of insulating members 40 may be connected to each other on the lateral side of electrode plates 10. The plurality of insulating members 40 may be integrally formed by being connected to each other.

Power storage module 1 may further include restraint members. The restraint members may restrain the plurality of electrode plates 10 and the plurality of battery elements 30 from the further outer sides of electrode plates 10 (in the present embodiment, third electrode plate 10c and fourth electrode plate 10d) located on the outermost side in a direction in which the plurality of electrode plates 10 are aligned (stacking direction in power storage module 1).

Next, a state in which the temperature of power storage module 1 according to the present embodiment has increased excessively will be described.

Fig. 2 is a schematic cross-sectional view showing a state in which the power storage module according to the embodiment of the present disclosure is being charged. As shown in Fig. 2, a voltage is applied to power storage module 1 from an external DC power supply, such that a charging current flows through power storage module 1. In Fig. 2 and the subsequent figures, the charging current is indicated by a thick black arrow.

In power storage module 1, the charging current flows through third electrode plate 10c, second battery element 30b, first electrode plate 10a, first battery element 30a, second electrode plate 10b, third battery element 30c, and fourth electrode plate 10d in this order.

During charging of power storage module 1, the temperature of each battery element 30 increases. When the voltage is applied and the charging current continues to flow although power storage module 1 has already been fully charged, each battery element 30 generates heat excessively. Particularly, in the present embodiment, first battery element 30a positioned between second battery element 30b and third battery element 30c generates heat most excessively. The heat generation occurs more noticeably when battery element 30a is restrained by the above-described restraint members and expansion of battery element 30a is suppressed.

When the temperature of battery element 30a increases excessively, the heat generated in battery element 30a is transmitted to insulating member 40a through sealing member 20a and the like. This also causes an increase in temperature of insulating member 40a. When the temperature of insulating member 40a reaches the melting point, insulating member 40a melts, and insulating member 40a eventually melts away from between the pair of electrode plates 10a and 10b.

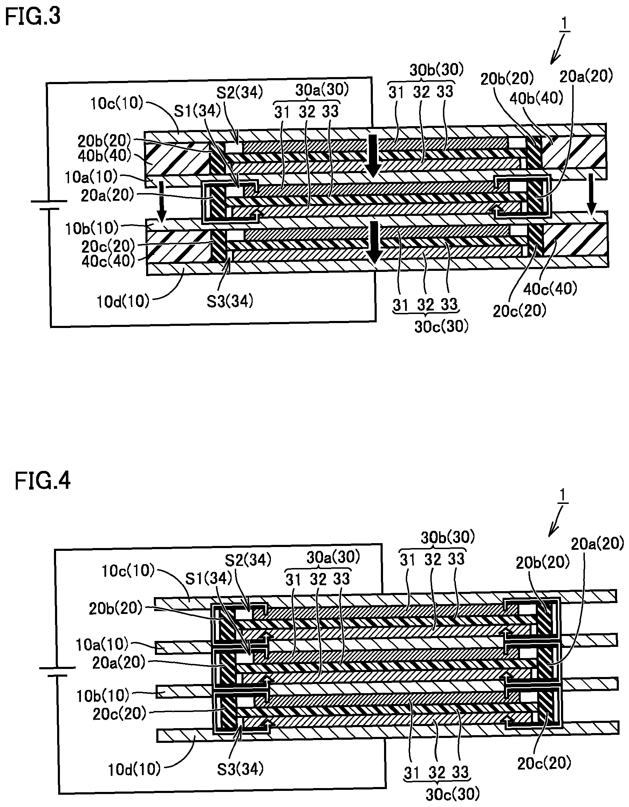

Fig. 3 is a schematic cross-sectional view showing a state in which the power storage module according to the embodiment of the present disclosure has been overcharged and the first insulating member has melted away. As shown in Fig. 3, when insulating member 40a (see Fig. 2) melts away, the pair of electrode plates 10a and 10b face each other outside space S1. Electric discharge occurs between the pair of facing electrode plates 10a and 10b.

The above-described electric discharge causes an external short circuit to occur in battery element 30a. In Fig. 3 and the subsequent figure, the external short circuit is indicated by a hollow arrow. As a result of the external short circuit, an SOC of battery element 30a decreases forcibly. Therefore, a further increase in temperature of battery element 30a having the excessively increased temperature can be suppressed. Thus, it is possible to provide power storage module 1 that allows early suppression of a further increase in temperature.

Due to the electric discharge between first electrode plate 10a and second electrode plate 10b, overcharging of the other battery elements 30 (in the present embodiment, second battery element 30b and third battery element 30c) in power storage module 1 continues. The charging current flows through third electrode plate 10c, second battery element 30b, first electrode plate 10a, second electrode plate 10b, third battery element 30c, and fourth electrode plate 10d in this order.

When the external short circuit occurs in first battery element 30a, the heat generated locally by this external short circuit is transmitted to second insulating member 40b and third insulating member 40c through first electrode plate 10a and second electrode plate 10b, respectively. As a result, the temperatures of second insulating member 40b and third insulating member 40c further increase temporarily. When the temperatures of second insulating member 40b and third insulating member 40c reach the respective melting points, second insulating member 40b and third insulating member 40c melt, and second insulating member 40b and third insulating member 40c also eventually melt away from between electrode plates 10.

Fig. 4 is a schematic cross-sectional view showing a state in which the power storage module according to the embodiment of the present disclosure has been overcharged and the plurality of insulating members have melted away. As shown in Fig. 4, when second insulating member 40b (see Fig. 3) melts away, first electrode plate 10a and third electrode plate 10c face each other outside second space S2. Electric discharge occurs between first electrode plate 10a and third electrode plate 10c that face each other. The above-described electric discharge causes an external short circuit to occur in second battery element 30b. As a result of the external short circuit, an SOC of second battery element 30b decreases forcibly.

In addition, when third insulating member 40c (see Fig. 3) melts away, second electrode plate 10b and fourth electrode plate 10d face each other outside third space S3. Electric discharge occurs between second electrode plate 10b and fourth electrode plate 10d that face each other. The above-described electric discharge causes an external short circuit to occur in third battery element 30c. As a result of the external short circuit, an SOC of third battery element 30c decreases forcibly.

As described above, since the SOC of at least one of second battery element 30b and third battery element 30c decreases forcibly, a further increase in temperature of at least one of second battery element 30b and third battery element 30c can be suppressed. Thus, an SOC of power storage module 1 as a whole decreases forcibly, and a further increase in temperature of power storage module 1 can be further suppressed.

In the description of the embodiment above, the combinable features may be combined with each other.

Although the embodiment of the present disclosure has been described, it should be understood that the embodiment disclosed herein is illustrative and non-restrictive in every respect. The scope of the present disclosure is defined by the terms of the claims.

## Claims

1. A power storage module comprising:
a pair of electrode plates (10a, 10b);
a sealing member (20) provided between the pair of electrode plates (10a, 10b) to form a space (S1) together with the pair of electrode plates (10a, 10b);
a battery element (30) including a positive electrode active material layer (31) provided on a surface of one (10a) of the pair of electrode plates in the space (S1), a negative electrode active material layer (32) provided on a surface of the other (10b) of the pair of electrode plates in the space (S1), and an electrolyte (34); and
an insulating member (40) positioned between the pair of electrode plates (10a, 10b), the insulating member (40) being provided on a side opposite to the space (S1) when viewed from the sealing member (20), wherein
a melting point of the insulating member (40) is lower than a melting point of the sealing member (20).

2. The power storage module according to claim 1, wherein
the battery element (30) further includes a separator (33) positioned between the positive electrode active material layer (31) and the negative electrode active material layer (32), and
the melting point of the insulating member (40) is lower than a melting point of the separator (33).

3. The power storage module according to claim 1 or 2, wherein
the melting point of the insulating member (40) is higher than 60°C.

4. The power storage module according to any one of claims 1 to 3, further comprising
three or more electrode plates (10) including the pair of electrode plates (10a, 10b), the three or more electrode plates (10) being aligned in one direction, wherein
each of the sealing member (20), the battery element (30) and the insulating member (40) is provided between the electrode plates (10) that are adjacent to each other, of the three or more electrode plates (10).

## Patentansprüche

1. Energiespeichermodul, umfassend:
ein Paar von Elektrodenplatten (10a, 10b);
ein Dichtungselement (20), das zwischen dem Paar von Elektrodenplatten (10a, 10b) bereitgestellt wird, um zusammen mit dem Paar von Elektrodenplatten (10a, 10b) einen Raum (S1) zu bilden;
ein Batterieelement (30), das eine positive aktive Elektrodenmaterialschicht (31), die auf einer Oberfläche von einer (10a) des Paars von Elektrodenplatten in dem Raum (S1) bereitgestellt wird, eine negative aktive Elektrodenmaterialschicht (32), die auf einer Oberfläche der anderen (10b) des Paars von Elektrodenplatten in dem Raum (S1) bereitgestellt wird, und einen Elektrolyten (34) beinhaltet; und
ein Isolationselement (40), das zwischen dem Paar von Elektrodenplatten (10a, 10b) angebracht ist, wobei das Isolationselement (40) auf einer Seite entgegengesetzt zu dem Raum (S1) bereitgestellt wird, wenn es von dem Dichtungselement (20) aus betrachtet wird, wobei
ein Schmelzpunkt des Isolationselements (40) niedriger als ein Schmelzpunkt des Dichtungselements (20) ist.

2. Energiespeichermodul nach Anspruch 1, wobei
das Batterieelement (30) ferner ein Trennelement (33) beinhaltet, das zwischen der positiven aktiven Elektrodenmaterialschicht (31) und der negativen aktiven Elektrodenmaterialschicht (32) angebracht ist, und
der Schmelzpunkt des Isolationselements (40) niedriger als ein Schmelzpunkt des Trennelements (33) ist.

3. Energiespeichermodul nach Anspruch 1 oder 2, wobei der Schmelzpunkt des Isolationselements (40) höher als 60°C ist.

4. Energiespeichermodul nach einem der Ansprüche 1 bis 3, das ferner umfasst
drei oder mehr Elektrodenplatten (10), die das Paar von Elektrodenplatten (10a, 10b) beinhalten, wobei die drei oder mehr Elektrodenplatten (10) in einer Richtung ausgerichtet sind, wobei
jedes des Dichtungselements (20), des Batterieelements (30) und des Isolationselements (40) zwischen den Elektrodenplatten (10) bereitgestellt wird, die von den drei oder mehr Elektrodenplatten (10) benachbart zueinander angebracht sind.

## Revendications

1. Module de stockage d'énergie comprenant:
une paire de plaques d'électrodes (10a, 10b) ;
un élément d'étanchéité (20) prévu entre cette paire de plaques d'électrodes (10a, 10b) afin de former un espace (S1) avec la paire de plaques d'électrodes (10a, 10b) ;
un élément batterie (30) comprenant une couche de matériau actif d'électrode positive (31) prévue sur une surface d'une (10a) de la paire de plaques d'électrodes dans l'espace (S1), une couche de matériau actif d'électrode négative (32) prévue sur une surface de l'autre (10b) de la paire de plaques d'électrodes dans l'espace (S1), et un électrolyte (34) ; et
un élément isolant (40) positionné entre la paire de plaques d'électrodes (10a, 10b), cet élément isolant (40) étant prévu sur un côté opposé à l'espace (S1) lorsqu'il est vu depuis l'élément d'étanchéité (20),
un point de fusion de cet élément isolant (40) étant plus bas qu'un point de fusion de l'élément d'étanchéité (20).

2. Module de stockage d'énergie selon la revendication 1, dans lequel
l'élément batterie (30) comprend en outre un séparateur (33) positionné entre la couche de matériau actif d'électrode positive (31) et la couche de matériau actif d'électrode négative (32), et dans lequel
le point de fusion de l'élément isolant (40) est plus bas qu'un point de fusion du séparateur (33).

3. Module de stockage d'énergie selon la revendication 1 ou 2, dans lequel
le point de fusion de l'élément isolant (40) est plus haut que 60 °C.

4. Module de stockage d'énergie selon l'une quelconque des revendications 1 à 3, comprenant en outre
trois plaques d'électrodes (10) ou plus, y compris la paire de plaques d'électrodes (10a, 10b), ces trois plaques d'électrodes (10) ou plus étant alignées dans une direction,
chacun de l'élément d'étanchéité (20), de l'élément batterie (30) et de l'élément isolant (40) étant prévu entre les plaques d'électrodes (10) qui sont adjacentes l'une à l'autre, parmi les trois plaques d'électrodes ou plus (10).
